# FASCICULE DE BREVET EUROPEEN

(11) **EP 1 000 674 B1**
(45) Date de publication et mention de la délivrance du brevet: **11.05.2005**
(21) Numéro de dépôt: 00101329.1
(22) Date de dépôt: 12.07.1994
(51) Int. Cl.: B21B 3/00, B21B 1/40, B21B 45/02, C10M 107/44, C10M 145/38, C10M 107/34, C10M 169/04, H01M 4/02, H01M 10/40, H01M 4/04, F16N 15/00

(54) **Procédé d'élaboration d'un film mince de métal alcalin ou d'alliage de métal alcalin, par laminage d'un feuillard en présence d'une composition lubrifiante**
Herstellungsverfahren einer Metalldünnschicht aus einem Alkalimetall oder einer Alkalimetalllegierung durch Walzen eines Metallbands in Gegenwart einer Schmiermittelzusammensetzung
Method of producing a thin sheet of an alkali metal or an alkalimetal alloy by rolling a metal strip in presence of a lubricating composition

(43) Date de publication de la demande: 17.05.2000
(62) Demande divisionnaire de: 94401621.1
(73) Titulaire: HYDRO-QUEBEC, Montréal Québec H2Z 1A4 (CA)
(72) Inventeur: Gauthier, Michel, La Prairie, Québec J5R 1E6 (CA); Bouchard, Patrick, Longueuil, Québec J4G 1V1 (CA); Guerin, Paul-Emile, Cap-de-la-Madeleine, Québec G8T 3E7 (CA); Armand, Michel, 38410 St Martin d'Uriage, Grenoble (FR)
(74) Mandataire: Sueur, Yvette

(56) Documents cités:
- EP-A- 0 193 870
- EP-A- 0 484 542
- EP-A- 0 524 783
- EP-A- 0 556 131
- US-A- 3 721 113
- US-A- 3 966 625
- PATENT ABSTRACTS OF JAPAN vol. 005, no. 117 (E-067), 28 juillet 1981 (1981-07-28) & JP 56 054758 A (HITACHI MAXELL LTD), 14 mai 1981 (1981-05-14)

## Description

L'invention concerne des additifs qu'on peut utiliser comme lubrifiants de laminage ou faisant partie de lubrifiants de laminage. L'invention se rapporte aussi à des compositions comportant ces additifs et qui peuvent être utilisées dans le laminage de feuillard notamment de lithium en vue d'obtenir des films minces, lesquels peuvent être utilisés tel que dans la production des générateurs électrochimiques aux électrolytes polymères. Au surplus, l'invention concerne l'utilisation des additifs en soi ou des compositions les renfermant pour la mise en forme par laminage de films de métaux alcalins ou de leurs alliages pouvant servir d'anodes dans des générateurs électrochimiques de préférence aux électrolytes polymères. L'invention se rapporte aussi à un procédé de laminage utilisant ces additifs ou des compositions les renfermant comme lubrifiants de laminage.

La production de films minces de lithium ayant des épaisseurs inférieures à 75 micromètres et en bandes larges, notamment 5 centimètres et plus et en longueurs de plusieurs dizaines de mètres, par des procédés rapides et fiables, se heurte à des difficultés techniques importantes attribuables aux propriétés physiques et chimiques extrêmes de ce métal: réactivité chimique, maléabilité, auto-soudure rapide par simple contact et adhésion forte sur la plupart des matériaux solides, notamment les métaux usuels.

Cette difficulté est confirmée par la difficulté d'obtenir des fournisseurs de métaux et de produits chimiques de spécialité, des films de lithium minces de 40 micromètres (µm) et moins de surface ou de longueur suffisante, possédant un fini de surface et une qualité chimique adéquate pour pouvoir être utilisés dans des générateurs au lithium.

Actuellement, l'extrusion à froid est utilisée pour obtenir en continu des feuillards 75 µm et plus. Ces épaisseurs sont généralement adaptées à la fabrication de générateurs au lithium utilisant des électrolytes liquides. Pour des épaisseurs inférieures, les films obtenus par extrusion sont ensuite laminés entre des rouleaux en plastique dur. Ces procédés ont été décrits et sont utilisés commercialement pour la production de quantités limitées de feuillards de 30-75 microns. On se référera particulièrement à U.S. 3.721.113, inventeur Hovsepian et daté du 20 mars 1973. Plusieurs passes successives sont selon l'état de l'art actuel nécessaires pour obtenir des films de 40-30 µm.

D'autre procédés alternatifs ont été décrits pour obtenir des feuillards ultra minces, utilisés notamment pour la fabrication de générateurs à électrolyte polymère en films minces. C'est le cas par exemple pour un procédé par laminage entre des rouleaux d'acier protégés par des films de plastique dur et non-réactif vis-à-vis du lithium, tel que décrit dans le brevet U.S. 3.721.113 ou encore pour des procédés basés sur l'enduction par mouillage du lithium à l'état fondu sur un support métallique ou plastique, décrit dans U.S. 4.824.746, inventeurs André Bélanger et coll, et daté du 25 avril 1989.

La difficulté de pousser le laminage du lithium jusqu'à des épaisseurs variant entre 40 et 5 microns pour la réalisation de générateurs à électrolyte polymère tient principalement à la réactivité et à l'adhésion du métal laminé avec les matériaux en contact avec lesquels il est mis: rouleaux de laminage, films plastiques de protection, additifs de laminage, ainsi qu'aux mauvaises propriétés mécaniques des feuillards minces. Par exemple, un film de lithium de 20 µm et de 10 cm de largeur se rompt sous un tension d'étirement supérieure à 579,13 KPa ce que ne permet pas de tirer sur le film sortant du laminoir ou de le décoller des rouleaux de laminage si le lithium y adhère tant soit peu.

Une approche habituellement utilisée pour le laminage ou le calandrage poussé de métaux durs, tels que le fer et le nickel, est basée sur l'emploi d'additifs de laminage liquides constitués de solvants organiques contenant ou non des graisses ou lubrifiants. Citons les acides gras ou leurs dérivés comme par exemple, les acides et les alcools lauriques ou stéariques, notamment les composés connus sous les marques de commerce EPAL 1012 de la compagnie Ethyl Corporation, U.S.A., qui sont des mélanges d'alcools linéaires primaires en C₁₀-C_{12.}

Pour le lithium et tout particulièrement pour le lithium destiné à des générateurs électrochimiques, l'usage de tels additifs se heurte à deux difficultés majeures:
1) la réactivité chimique du lithium mis en contact avec des solvants ou des lubrifiants comportant des fonctions organiques réactives, telles que les acides organiques et les alcools. Ces fonctions réagissent à la surface du lithium durant ou après le laminage et créent des films de passivation à la surface du métal qui nuisent au bon fonctionnement des générateurs électrochimiques surtout lorsque ces derniers sont destinés à être rechargeables;
2) la difficulté d'éliminer les lubrifiants ou graisses mis en contact avec le lithium après le laminage. C'est le cas, par exemple, lorsque l'on choisi des lubrifiants majoritairement constitués de chaînes hydrocarbonées, parce que peu réactives avec le lithium. Ces composés constituent des isolants électriques nuisibles au bon fonctionnement des électrodes de lithium réalisées avec ces feuillards. De tels lubrifiants sont peu solubles dans les électrolytes polymères et doivent donc être éliminés de la surface du lithium par lavage après laminage. Outre le fait que le lavage de la surface du lithium est une opération délicate et coûteuse à réaliser, on constate que cette opération a inévitablement pour effet de contaminer la surface du lithium, malgré toute la rigueur qui peut être mise en oeuvre pour contrôler la qualité de la surface du métal. Ce dernier réagit en effet irréversiblement avec toutes les impuretés, dont l'eau, contenues dans les solvants de lavage ou résultant de contaminations accidentelles.

On peut montrer que le lithium obtenu par un procédé de laminage avec additif suivi d'un lavage ultérieur est généralement plus contaminé en surface qu'un lithium laminé sans additif. Ce phénomène peut être observé à l'aide de moyens optiques, y compris la simple inspection visuelle ou par le contrôle de l'impédance de piles électrochimiques réalisées à partir d'électrolytes polymères. D'autre part, le laminage sans solvant et sans lubrifiant se traduit par des vitesses de production faibles et par une tendance du lithium frais à coller aux rouleaux ou aux films de protection des rouleaux; de plus, plusieurs laminages successifs sont alors requis pour descendre à des épaisseurs de feuillards inférieures à 40 micromètres.

La présente invention a pour objet de résoudre le problème du laminage ou du calandrage de films de lithium, à des épaisseurs comprises entre 40 et 5 µm, qui soient utilisables directement dans des batteries au lithium en films minces, notamment dans des batteries à électrolyte polymère.

L'invention a aussi pour objet de proposer des additifs de lubrification chimiquement compatibles avec le lithium et qu'on peut utiliser dans un procédé de laminage ne nécessitant pas de lavage ultérieur de la surface du lithium laminé.

Un autre objet de l'invention réside en une composition constitué d'un lubrifiant de laminage comportant un solvant approprié ainsi qu'un additif à deux fonctions.

Un autre objet de l'invention porte sur une amélioration au procédé de laminage du lithium en présence d'un lubrifiant amélioré.

Un autre objet de l'invention est de proposer des additifs lubrifiants de laminage permettant de produire en une seule passe, du lithium extrêmement mince, notamment d'une épaisseur inférieure à 10 µm, à des vitesses appréciables pouvant aller jusqu'à 50 m/min, et même plus, et ce avec un excellent contrôle des propriétés de surface: profil de surface uniforme et faible impédance de la couche de passivation lorsque les feuillards ainsi réalisés sont utilisés dans un générateur électrochimique.

Un autre objet de l'invention consiste en la mise au point d'un lubrifiant de laminage comportant un additif et des solvants, dans lequel ces derniers sont choisis pour leur compatibilité chimique avec le lithium destiné à un générateur électrochimique.

Telle qu'utilisée dans le présent mémoire descriptif et dans les revendications annexées, par compatibilité chimique d'un solvant ou d'un additif avec le lithium d'un générateur électrochimique, on entend l'absence de réaction chimique avec le lithium ou encore, une réaction chimique limitée conduisant à la formation d'un film de passivation qui ne nuit pas aux échanges électrochimiques, à l'interface lithium/électrolyte dudit générateur.

Un autre objet de l'invention réside en la formulation chimique d'un lubrifiant de laminage non volatil choisie de façon à ce qu'il puisse se maintenir à la surface du lithium après le laminage et ce sans nuire au bon fonctionnement du feuillard de lithium (anode), lorsque ce dernier est utilisé tel quel dans un générateur électrochimique, c'est-à-dire sans aucune étape de lavage préalable.

Un autre objet de l'invention porte sur un procédé de laminage amélioré utilisant des additifs selon la présente invention.

L'invention porte sur le choix d'un composé chimique lubrifiant de poids moléculaire élevé comportant au moins deux segments de nature chimique différentes: une chaîne ou un segment de chaîne ayant une fonction de lubrifiant (L) telle que constituée, par exemple, par une chaîne hydrocarbonée comportant au moins 8 atomes de carbone associée à un segment de chaîne solvatante (S), capable de dissocier ioniquement au moins en partie un sel métallique, notamment de lithium, telle qu'un segment de chaîne de polyoxyde d'éthylène. Le segment solvatant contenu dans l'additif de lubrification est choisi de façon à pouvoir conférer une conductivité ionique à l'additif de lubrification.

Une façon préférée mais non limitative d'induire la conductivité ionique dans l'additif de lubrification est réalisée lorsque le lithium laminé est mis en contact avec l'électrolyte (polymère solvatant + sel de lithium) du générateur. Le sel présent dans l'électrolyte diffuse alors dans la partie solvatante de l'additif et constitue localement un complexe conducteur (chaîne solvatante + sel).

Le lubrifiant selon l'invention comprend au moins une séquence:

L-Y-S

où:
L désigne un radical hydrocarboné, notamment alkyl, alkylène, linéaire ou cyclique ou aryl-alkyl, saturé ou non, préférentiellement de plus de 8 carbones servant de segment lubrifiant compatible avec le lithium;
S désigne un segment oligomère comportant des hétéroatomes notamment O ou N, et capable de solvater des sels, par exemple de lithium et d'assurer une conductivité électrolytique;
Y désigne un lien chimique ou un groupement chimique au moins divalent unissant les chaînes ou segments de chaînes L et S.

Le segment solvatant S peut être relié à un groupement terminal C pour former la séquence L-Y-S-C, C étant alors choisi pour sa faible réactivité avec le lithium.

C peut désigner notamment un groupement Y'-L', identique ou différent du groupement Y-L, un groupement radical alkyle, alkyl-aryle, de valence égale ou supérieure à 1. Dans une variante, C est un groupement polymérisable susceptible d'être incorporé dans au moins une des unités de répétition constitutive de l'électrolyte polymère d'un générateur électrochimique. Dans une autre variante, C comporte un groupement ionophore plus ou moins dissociable capable d'induire une conductivité ionique intrinsèque dans l'additif.

Des exemples de chaînes polymériques solvatantes sont donnés dans les brevets suivants: U.S. 4.303.748, inventeurs Michel Armand et coll. et daté du ler décembre 1981, et U.S. 4.578.326, inventeurs Michel Armand et coll. et daté du 25 mars 1986. Les chaînes à base d'oxyde d'éthylène -[CH₂-CH₂-O]ₙ-, d'oxyde de propylène -[CH₂-CH₂(CH₃)-O]ₙ- ou de poly-(N-méthyl-éthylèneimine) -[CH₂-CH₂-N(CH₃)]ₙ ou leurs combinaisons sont généralement préférées, mais d'autres fonctions solvatantes peuvent également être utilisées pour autant qu'elles puissent induire une conductivité ionique dans l'additif de lubrification.

Dans le cas où le segment hydrocarboné provient d'un acide gras, le lien Y est préférentiellement constitué par des groupes ester (L)-CO-O-(S) ou éther (L)-O-(S). Y peut aussi représenter des groupements amine ou amide.

Selon une réalisation préférée de l'invention, le segment peut correspondre à la chaîne hydrocarbonée d'un acide gras comportant au moins 8 et de préférence de 10 à 30 atomes de carbone. C'est ainsi que par exemple, L peut être constitué par une chaîne hydrocarbonée d'un acide gras tel que l'acide stéarique et Y est alors un lien chimique du type ester ou éther, ou peut représenter un groupement carboxylate provenant d'un ester d'acide gras.

Selon une autre réalisation préférée de l'invention, le segment S peut être constitué de polyéthers ou de polyamines de poids moléculaire supérieure à 150.

Selon une autre réalisation préférée de l'invention, le groupement terminal C peut aussi comporter une fonction chimique apte à la fixation covalente d'un sel métallique, notamment un sel de lithium.

Selon une autre réalisation préférée de l'invention, le lien chimique C peut comporter un sel de lithium greffé chimiquement par l'anion au moyen d'une ou plusieurs insaturations.

L'invention porte aussi sur un film de lithium recouvert d'une couche mince de l'additif défini ci-dessus, dont l'épaisseur du film étant compris entre 5 et 50 microns.

Un autre aspect de l'invention concerne une anode à base de lithium réalisé à partir d'un feuillard de lithium recouvert d'une couche mince de l'additif défini ci-dessus, l'épaisseur de l'anode étant comprise entre 5 et 50 µm, mis en contact direct avec un feuillard comportant du carbone ou des métaux susceptibles de former chimiquement un alliage de lithium ou un composé d'intercalation du lithium.

L'invention porte aussi sur un générateur électrochimique à électrolyte polymère comportant une anode de lithium mise en forme comme indiqué ci-dessus, dans lequel un sel de lithium libre est présent dans l'électrolyte de façon à former par diffusion un complexe conducteur électrolyte avec la chaîne S de l'additif, ce dernier pouvant être soluble dans l'électrolyte.

Selon une autre réalisation de l'invention, on prévoit l'utilisation d'un additif ou d'une composition tels que définis ci-dessus pour la mise en forme par laminage de films de métaux alcalins ou de leurs alliages pouvant servir d'anodes dans les générateurs électrochimiques à l'électrolyte polymère.

L'invention concerne enfin un procédé de laminage destiné à l'obtention de films minces de métaux alcalins ou de leurs alliages, à partir d'un feuillard d'un desdits métaux ou alliages selon lequel on fait passer le feuillard entre des rouleaux de travail avec un lubrifiant de laminage pour laminer le feuillard en film mince, caractérisé en ce que le lubrifiant comporte un additif ou une composition tels que définis ci-dessus.

Un additif particulièrement intéressant est un distéarate de polyoxyéthylène dont le segment solvant correspond à une masse moléculaire comprise entre environ 150 et 4000.

Les compositions selon l'invention renferment de préférence 0,01 à 10% en poids d'additif, plus spécialement environ 0,2%. Quant au solvant, il peut être choisi parmi les hydrocarbures linéaires saturés ou partiellement insaturés, cycliques ou aromatiques ou non, par exemple l'heptane, le benzène, le toluène, le cyclohexane ou un mélange de ces derniers. Il peut aussi être choisi parmi les solvants aprotiques compatibles avec le lithium.

Une formulation particulièrement avantageuse consiste à utiliser une famille de composés du type: L-Y-S-Y-L basée sur des diesters d'acides gras, notamment les distéarates de polyéther glycol, notamment les composés: CH₃-(CH₂)₁₆-(COO-(CH₂-CH₂-O)ₙ-OOC(CH₂)₁₆-CH₃ où n varie préférentiellement de 3 à 100. Des composés comportant des segments polyéther de poids moléculaire de 200, 400 et 600 sont disponibles commercialement de la compagnie Polyscience, notamment distéarate POE 400 Aldrich N° 30541-3.

Les segments stéarates ont d'excellentes propriétés de lubrification et leurs chaînes hydrocarbonées sont inertes vis-à-vis du lithium; dans ce cas le lien Y est assuré par le groupe carboxylique de l'acide gras de départ. Le groupement terminal C est alors constitué d'un segment Y'-L' identique à L-Y.

Il a été constaté qu'une chaîne centrale de polyéther, de bas poids moléculaire, le distéarate POE 200 suffit à donner aux composés lubrifiants une conductivité ionique de l'ordre de 1 X 10⁻⁵ S.cm à l'ambiante lorsqu'un sel de lithium tel que le Li(CF₃SO₂)₂NLi est ajouté dans un rapport tel que le rapport O/Li est de 30/1. Cette valeur est amplement suffisante pour assurer les échanges ioniques à l'interface lithium/électrolyte dans un générateur électrochimique compte tenu de la faible épaisseur du dépôt résiduel de lubrifiant après laminage.

Ces formulations préférées sont données à titre d'exemple des modes de réalisation possibles de l'invention. D'autres fonctions lubrifiantes et solvatantes L et S peuvent être utilisées ainsi que d'autres liens Y. A titre d'exemple non limitatif le lecteur pourra consulter les ouvrages suivants traitant des types de chaînes solvatantes:
- Polymer Electrolytes review-1, J.R. MacCallum & C.A. Vincent eds. Elsevier Applied Science London (1987);
- Polymer Electrolytes review-2, J.R. MacCallum & C.A. Vincent eds. Elsevier Applied Science London (1989);
- Solid Polymer Electrolytes, F.M. Gray VCH Publisher New-York, Weinheim (1991); ainsi que
- Surface Active Ethylene Oxide Adducts, par V. Schoenfeldt-Pergamon Press, (1966).

La préparation des additifs selon la présente invention est bien connue de l'homme de l'art et n'a pas à être discutée en détail dans le présent contexte. Qu'il suffise de mentionner que tout chimiste versé dans l'art n'aura aucun problème à synthétiser l'additif désiré une fois établies les chaînes solvatantes et lubrifiantes et le lien chimique que l'on désire utiliser.

Lors du laminage, il est généralement préférable de diluer les lubrifiants de l'invention dans un ou des solvants compatibles avec le lithium qui sont préférentiellement des hydrocarbures linéaires, saturés ou partiellement insaturés, ou encore cycliques, aromatiques, ou non tels que l'heptane, le benzène, le toluène, le cyclohexane ou tout autre solvant organique aprotique prédéhydraté ou un mélange de ceux-ci. Cette dilution permet de réduire au minimum la quantité de lubrifiant requise et d'obtenir des qualités optimales de lithium pour l'usage en générateur électrochimique. Ces solvants sont préalablement déshydratés, par exemple sur tamis moléculaire, pour abaisser la teneur en eau en-dessous de 100 ppm. Les concentrations des additifs peuvent varier jusqu'à environ 10% en poids par exemple entre 0,01 et 10% en poids, de préférence 0,2% en poids. L'addition du lubrifiant en solution est faite de façon contrôlée juste avant le laminage entre les rouleaux. Le film laminé est séché en continu avec de l'air sec dès la sortie des rouleaux et ensuite enroulé avec ou sans un film séparateur en plastique inerte, de préférence en polypropylène ou en polyéthylène.

L'invention sera mieux comprise par les dessins annexés donnés à titre purement illustratifs mais sans caractère limitatif, dans lesquels:
la figure unique est un schéma représentatif d'une opération de laminage utilisant un additif selon la présente invention.

On verra qu'un feuillard de lithium 1 d'une épaisseur d'environ 250 micromètres fixé sur un dérouleur (non illustré) est passé entre deux rouleaux de travail 3 et 5 en polyacetal. On applique une pression suffisante aux deux rouleaux dans les sens indiqués par les flèches 7 et 9 pour réduire l'épaisseur du feuillard d'environ 90%. A l'entrée du feuillard 1 entre les rouleaux de laminage, on déverse un lubrifiant de laminage 11, notamment du toluène à partir d'un bec verseur 13.

A la sortie des deux rouleaux de laminage, le feuillard de lithium s'est transformé en un film 15 dont l'épaisseur se situe à environ 25 micromètres. D'autre part, on s'apercevra que le film 15 reste accolé à la surface du rouleau 3 depuis le point de rencontre 17 entre les deux rouleaux 3 et 5 jusqu'en un point donné limite 19 sur la circonférence du rouleau 3 formant un angle α d'environ 90° avec le point de rencontre 17.

On enroule ensuite le film 15 sur un enrouleur (non illustré) avec suffisamment de tension, déterminée empiriquement pour d'une part faire décoller le film 15 du point 19 et le ramener graduellement au point 21 d'où l'opération se poursuivra sans autre changement.

Normalement, au point 21, l'angle formé β sera d'environ 45° étant entendu que cet angle pourra varier selon les circonstances et les propriétés désirées du film de lithium 15.

Une façon avantageuse de réaliser l'invention est décrite dans la demande de brevet déposée simultanément et portant sur un procédé de laminage en une seule passe, entre deux rouleaux de plastique dur. Cette procédure préférentiellement réalisée en une seule passe met en jeu un contrôle de l'adhésion sur l'un des rouleaux plastiques de façon à tirer le lithium selon un angle privilégié et à contrôler sa planéité.

D'autres procédés de laminage utilisant des rouleaux métalliques sont également possibles en utilisant ces additifs. Ainsi, on pourrait pré-enduire les rouleaux métalliques avec du lubrifiant de manière à minimiser l'adhésion. Toutefois la concentration ainsi que la nature chimique des additifs selon la présente invention doivent être ajustés en fonction des vitesses de production envisagées.

Ces additifs sont également applicables au laminage d'alliages riches en lithium tels les alliages lithium-bore ou lithium-magnésium ou encore au laminage d'autres métaux alcalins, notamment le sodium ou les alliages sodium-plomb.

Le procédé, les compositions et les additifs selon la présente invention sont également applicables à la mise en oeuvre d'anodes de lithium utilisées dans des générateurs à électrolytes liquides dans la mesure où le film résiduel est conducteur ou soluble dans l'électrolyte. De même, le procédé et les additifs selon la présente invention peuvent être utilisés pour préparer chimiquement des anodes de lithium alliées ou à base de carbone-lithium.

De façon avantageuse mais non limitante, il est possible d'utiliser comme additif de l'invention, les produits chimiques suivants:

Les distéarates de polyoxyde d'éthylène dont le segment solvatant possède une masse molaire équivalente (mol. st.) de 200, 400 et 600, par exemple le distéarate 400 de Aldrich No. 30541 - 3.

Les agents surfactants non-ioniques: BRIJ® de la compagnie ICI América disponibles chez Aldrich sous les numéros de catalogue:

| | |
|---|---|
| 85,836-6 Brij® | 35 |
| 23,599-7 Brij® | 58 |
| 23,600-4 Brij® | 78 |
| 23,865-1 Igepal® | CO-720 |
| 23,869-4 Igepal® | DM-970 |

D'autres produits possibles sont représentés par :

Les distéarates (dilaurates, dipalmitates, dioléates)
- de POE (200-4000 mol. wt.)
- de polypropylène glycol (725, 1000, 2000,)
- de Pluronic® (OE-OP blocs)
- de polytétraméthylène oxyde (poly THF) (650, 1000, 2000).

Les éthers di hexadécylique du POE (200-4000 poids mol.).

Les dicholesterylcarbonates de POE 200-4000.

Les tristéarates (laurates, palmitates, oléates) de POE, triol (200-4000) (DKS).

Les monostéarates (laurates, palmitates, oléates)
- de BRIJ (35,58,78)
- d'Igepal (CO-720, DM-970).

Les polyméthacrylates d'oligo-oxyéthylène-monolauryléther.

Il est souvent préférable d'utiliser des solvants compatibles avec le lithium pour diluer les additifs de lubrification. Ces derniers sont préférentiellement des hydrocarbures linéaires. Les concentrations des additifs peuvent alors varier entre quelques dizaines de pourcent P/P et moins de 0,05% P/P.

Le lithium produit en utilisant les additifs de la présente invention peut être utilisé tel que dans des générateurs à électrolytes polymères. La demande de brevet canadien N° 2.068.290-6 déposée le 8 mai 1992 décrit une façon de réaliser un générateur complet et diverses façons d'établir des contacts électriques sur le feuillard de lithium. Dans ces cas, l'additif de laminage est rendu conducteur électrolyte par la diffusion du sel de lithium en provenance du film d'électrolyte du générateur.

Dans certains cas, la couche résiduelle de lubrification peut être plus ou moins dissoute ou dispersée dans l'électrolyte, notamment quand ce dernier est de basse masse moléculaire ou comprend des solvants aprotiques liquides.

D'autres caractéristiques et avantages de la présente invention ressortiront d'ailleurs de la description suivante d'exemples de réalisations donnés à titre illustratif mais nullement limitatif.

### Exemple 1

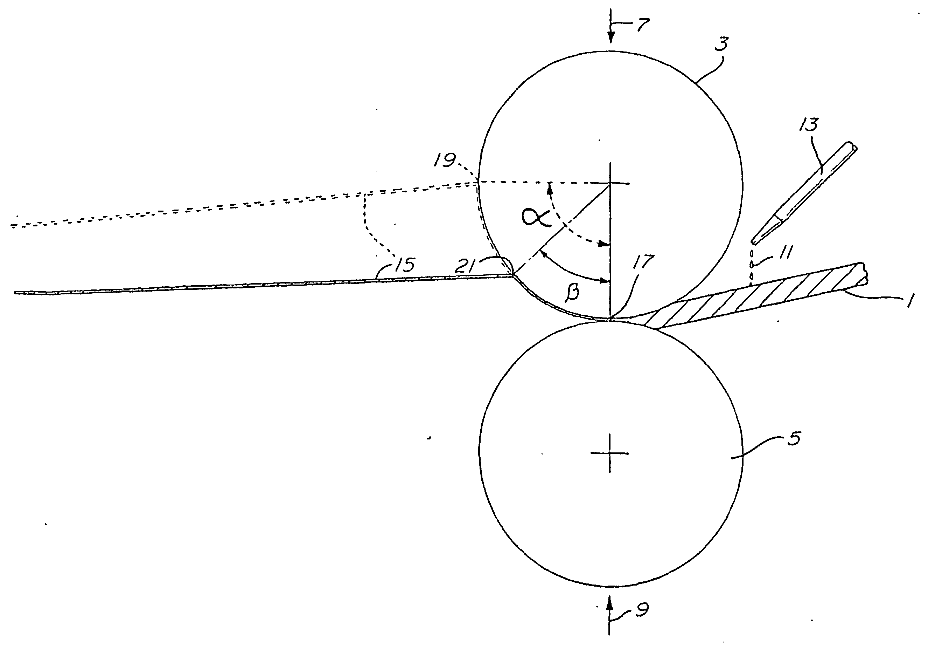

Dans cet exemple on démontre l'effet déterminant d'un additif préféré de l'invention sur le laminage en continu et en une seule passe d'un film de lithium de moins de 30 micromètres (µ). Le dispositif utilisé est celui décrit à la Figure 1 et le laminage est effectué dans une atmosphère anhydryde contenant moins de 1% d'humidité relative. Les rouleaux sont constitués de polyacetal et ont un diamètre de 20 mm; le lithium de départ est constitué d'un feuillard extrudé de 250 micromètres (µ) d'épaisseur. Les solvants et au besoin l'additif sont préalablement déshydratés sur tamis moléculaire afin d'obtenir une concentration d'eau inférieure à 10 ppm.

Dans un premier temps, on tente de laminer en continu un feuillard de lithium de 57 mm de largeur et de l'amincir en une seule passe à 25 p. Lorsqu'aucun liquide lubrifiant n'est utilisé lors du laminage, le lithium colle immédiatement sur les rouleaux et le procédé ne fonctionne pas; avec l'ajout d'hexane, le laminage est impossible à réussir à moins de réduire considérablement le taux d'amincissement du feuillard. Au mieux nous avons pu obtenir un lithium de 90 µ en une seule passe dont la planéité du film est extrêmement mauvaise. Donc, l'hexane, tel qu'employé dans l'art antérieur, n'a pas les qualités lubrifiants suffisantes pour être utilisé seul dans un procédé continu à une seule passe pour obtenir un lithium de moins de 25 µ.

Lorsque le laminage est effectué avec un liquide lubrifiant constitué de toluène, ajouté au rythme de 8 ml/min. sur un feuillard extrudé de 57 mm de largeur, le laminage en continu de lithium à 25 µ devient possible et une vitesse maximale de 5 m/min. est obtenue en laissant adhérer le film laminé au rouleau supérieur au quart de sa hauteur (angle de 45°), tel qu'illustré à la Figure 1 de la demande de brevet canadien ci-haut mentionnée. Cette opération permet de contrôler parfaitement le tension appliquée sur le film libre et donne un lithium de planéité excellente. Des longueurs de quelques dizaines de mètres peuvent ainsi être obtenues en continu. Le passage rapide en cours d'opération du toluène à l'hexane, fait remonter instantanément l'épaisseur du lithium à environ 90 µ et on retrouve un lithium de très mauvaise planéité.

L'intérêt des additifs de l'invention est démontré en utilisant un lithium extrudé de 250 µ de 143 mm de largeur. Le dispositif des essais précédents est utilisé avec une solution d'hexane et de toluène dans un rapport 9:1 contenant un distéarate POE 200 (poids mol.) à la concentration de 0,2% P/P. Un excès de solution lubrifiante est ajouté sur le feuillard de lithium extrudé au taux de 6 ml/min. Dans ces conditions un film de lithium de 22 µ d'excellente planéité est obtenu en une seule passe à une vitesse de laminage de plus de 20 m/min. Ce procédé encore non-optimal permet en outre de produire des rouleaux de feuillards laminés de plus de 300 mètres de long dont l'épaisseur est constante à plus ou moins 2 µ. Les productions successives sont très reproductibles d'un essai à l'autre et les taux de pertes ou interruptions du procédé sont négligeables; des productions plus importantes sont ainsi possibles à partir de rouleaux lithium extrudés plus longs ou à partir d'une alimentation du laminoir directement à partir d'une extrudeuse.

### Exemple 2

Le lithium de 22 µ produit en utilisant l'additif de l'exemple 1 est utilisé comme anode d'un générateur au lithium fonctionnant à 60°C. L'aspect visuel du lithium est excellent, lithium brillant sans aucune coloration, et le profil de surface obtenu au Dektak® (modèle 3030 de la compagnie VEECO U.S.A.) fluctue en-deça de 3 µ. Pour cet essai de laboratoire, le feuillard de lithium est légèrement appliqué sous pression à un feuillard de nickel mince pour assurer la collection du courant. L'électrolyte utilisé est constitué d'un électrolyte polymère constitué d'un copolymère de l'oxyde d'éthylène et de méthylglycidyl éther et d'un sel de lithium, le (CF₃SO₂)₂NLi dans un rapport oxygène sur lithium (O/Li) de 30/1. La cathode composite est constituée d'oxyde de vanadium et de noir de carbone dispersée dans de l'électrolyte polymère et possède une capacité de 5 C/cm². La surface active de la pile ainsi constituée est de 3,9 cm². L'impédance initiale de cette pile à 60°C est de 15 Ω, c'est-à-dire équivalent ou inférieure aux meilleurs lithium obtenus commercialement. Les propriétés de cyclage de cette pile utilisant le lithium de l'exemple 1 sont excellentes après 100 cycles et le taux d'utilisation de la pile demeure au moins équivalent aux piles semblables réalisées avec du lithium commercial, soit environ 90% de la valeur initiale stabilisée après 10 cycles. Cet exemple confirme que la présence du distéarate de POE non-volatil laissé à la surface du lithium ne nuit pas au bon fonctionnement du générateur. Ce résultat s'explique par la conductivité électrolytique engendré par la présence du segment POE solvatant de l'additif et par la compatibilité chimique de ce dernier avec le lithium. Dans un essai indépendant, la conductivité électrolytique de cet additif, lorsque la teneur en sel (CF₃SO₂)₂NLi est de 30/1, est d'environ 1 X 10⁻⁵ S.cm.

### Exemple 3

Dans cet exemple nous avons évalué à la température de 25°C l'impédance de piles symétriques Li°/électrolyte polymère/Li° réalisées à partir de lithium laminé sans additif puis recouverts d'un excès de divers matériaux lubrifiants possibles.

La quantité de lubrifiant utilisé par unité de surface de lithium est de 0,03 mg/cm². Cette valeur correspond à un excès de lubrifiant par rapport à ce qui est nécessaire pour le laminage selon l'exemple 1, mais le but visé est d'amplifier et d'accélérer l'effet électrochimique des divers additifs. Les valeurs d'impédances sont données pour des piles dont la surface active est de 3,9 cm². L'électrolyte de l'exemple 1 est également utilisé pour la réalisation des piles qui sont assemblées par pressage à chaud sous vide.

Pour les divers matériaux utilisés, les résultats sont les suivants:

| | Impédance |
|---|---|
| 1) Le distéarate de POE 200 (mol. Wt.) | 113 Ω |
| 2) Le distéarate de POE 600 (mol. Wt.) | 113 Ω |
| 3) L'acide stéarique pure | 840 Ω |
| 4) Le POE pur de masse molaire 500. | 139 Ω |

Les valeurs observées confirment l'influence du segment POE sur la conductivité électrolytique des additifs et permettent de conclure que l'acide stéarique souvent utilisé comme lubrifiant de laminage de métaux conventionnels est incompatible avec le lithium en vue d'un usage dans un générateur électrochimique.

### Exemple 4.

Dans cet exemple on compare l'effet de divers additifs de laminage connus pour leurs propriétés lubrifiantes sur l'efficacité du laminage en une passe de lithium de 250 µ à environ 30 µ.

Pour effectuer ces comparaisons, on amorce le laminage dans des conditions semblables à celles de l'exemple 1 en utilisant l'additif de distéarate de POE 200. Lorsque le laminage est en cours, on change la composition de la solution en remplaçant le distéarate de POE par les autres additifs. L'effet de l'addition s'observe immédiatement en suivant l'épaisseur du film de lithium laminé, sa planéité et son apparence visuelle. Lorsque la solution contenant le distéarate est remplacée par une solution de stéarate d'éthyle de concentration 0,15% P/P, l'épaisseur du lithium monte brusquement de 40 à 90 p et avec perte de planéité du lithium laminé.

Lorsque l'on passe à une solution de laminage à base du lubrifiant de laminage EPAL® 1012 (alcool linéaire en C₁₀) de la compagnie américaine Ethyl Corporation on constate que l'épaisseur du lithium laminé monte progressivement au-delà de 65 µ et le lithium produit devient collant sur le centre des rouleaux alors que les côtés deviennent irréguliers (ondulations).

Lorsque l'on passe à une solution de laminage à base de POE 5000 dans le toluène, on observe une remonté rapide de l'épaisseur du lithium laminé à 90 µ avec perte de planéité.

Ces essais illustrent l'importance des formulations à base de stéarates qui agissent comme lubrifiants et comportent des fonctions solvatantes, notamment à base de POE. Ces formulations privilégiées mais non-limitatives sont également supérieures à des additifs à base de POE pur en terme de procédé de laminage même si les propriétés de conducteurs électrolytiques sont dans ce cas adéquates comme illustré dans l'exemple 3.

### Exemple 5

Dans cet exemple on remplace le stéarate de POE par d'autres composés de l'invention en conservant les autres conditions identiques. Les deux composés utilisés sont: le dicholestéryl-carbonate de POE 600 (mol. Wt.) et le dipalmitate de POE 4000.

Dans les deux cas la vitesse de laminage peut être maintenue et l'épaisseur du lithium laminé est sensiblement le même. Dans ces deux cas, la planéité du lithium est conservée. Ces exemples confirment la généralité des formulations réunissant la fonction solvatante et la fonction lubrifiante.

### Exemple 6

Cet exemple décrit un composé selon l'invention dans lequel est inclus le groupement ionophore selon la formule L-Y-S-C (où C comprend un sel métallique dissociable permettant à l'additif L-Y-S-C d'avoir une conductivité ionique intrinsèque). Ce type de composé est important comme additif de laminage lorsque le lithium laminé est destiné à être utilisé notamment dans des générateurs dont l'électrolyte comporte un sel dont l'anion est fixé chimiquement sur la chaîne polymérique.

Dans ce cas, il n'y a aucune possibilité de diffusion du sel de lithium et l'additif de lubrification doit comporter une fonction ionophore pour éviter de constituer un dépôt isolant à la surface du lithium.

Un tensio-actif non-ionique de type BRIJ 35®, le polyoxyéthylène 23 lauryl éther C₁₂H₂₅(OCH₂CH₂)₂₃OH est sulfoné par la procédure suivante: 12 g de BRIJ 35® sont séchés par distillation azéotropique avec du benzène et lyophylisation. Après ajout de 50 ml de THF, les groupements OH terminaux sont métallés par l'hydrure de sodium en présence de 5 mg de triphénylméthane. La stoechiométrie est déterminée par colorimétrie, la fin de la réaction étant indiquée par la persistance de la couleur rouge intense de l'anion Φ₃C. On ajoute alors 1,4 g de 1,4 butane sulfone. Après évaporation du solvant, l'oligomère sulfoné est obtenu sous forme de poudre. 5 g du produit ainsi formé en suspension dans 15 ml d'acétonitrile sont traités par 1 ml de chlorure de thionyle et 20 µl de diméthylformamide. Un précipité de chlorure de sodium se forme en 20 mn. Après filtration, le solvant et l'excès de SOC₂ sont évaporés sous pression réduite. Le résidu est solubilisé dans 30 ml de pyridine et ajouté à 1,2 g du sel de sodium du bis(trifluorométhanesulfonyle)méthane. Après filtration, le mélange réactionnel est agité en présence de 1 g de phosphate de lithium Li₃PO₄. Une nouvelle filtration permet de séparer une solution incolore qui par concentration donne une cire. Ce matériau possède des propriétés tensioactives, de lubrification et de conduction ionique.

Lorsqu'utilisé dans les conditions des exemples 1 et 5, ce matériau permet également le laminage du lithium dans des conditions équivalentes. Cet exemple est non-limitatif et d'autres matériaux équivalents comportant une fonction ionophore plus ou moins dissociable peuvent également être utilisés.

### Exemple 7

Un feuillard de lithium l extrudé de 250 micromètre d'épaisseur et de 143 mm de largeur est utilisé comme matériel de départ. Celui-ci est fixé sur un dérouleur, passé entre des rouleaux de travail et le film fixé à un enrouleur. Une pression suffisante pour amincir le film est appliquée sur les rouleaux de travail. Ces rouleaux sont en polyacétal et ont un diamètre de 20 mm. Le film est installé sur l'appareil entre les rouleaux de travail. La pression sur les rouleaux est augmentée afin d'amincir le film d'environ 90%. Un lubrifiant est ajouté sur le film de lithium à un débit de 6 ml/min. Ce lubrifiant est composé d'un mélange de solvants auquel on ajoute un additif de laminage, soit de l'hexane et de toluène secs dans un rapport 9: 1 et 0,2% p/p POE 200 distéarate de formule CH₃-(CH₂)₁₆-(COO-(CH₂-CH₂-O)ₙ-OOC(CH₂)₁₆-CH₃ où n est choisi de sorte que le segment polyéther possède une masse moléculaire de 200.

On laisse adhérer le film au quart de la hauteur du rouleau de travail afin de contrôler parfaitement la tension appliquée sur celui-ci. La pression exercée sur les rouleaux est ajustée de façon à obtenir en une seule passe un film de lithium de 25 micromètres d'épaisseur, homogène à ± 2 µm et 300 mètres de longueur. On voit donc qu'on peut fonctionner en continu sans rejet.

Cet additif permet de porter la vitesse de laminage à 20 m/min. et d'obtenir un film de lithium mince d'excellente qualité.

## Revendications

1. Procédé d'élaboration d'un film mince de lithium ou d'un alliage de lithium par laminage d'un feuillard de lithium ou d'un alliage de lithium pouvant servir d'anode dans un générateur électrochimique, comprenant une étape au cours de laquelle on fait passer le feuillard entre deux rouleaux de laminage en contact l'un avec l'autre, après avoir déposé sur la surface du feuillard une composition lubrifiante, de telle sorte que sur compression du feuillard entre lesdits rouleaux, ladite surface adhère normalement à la surface de l'un desdits rouleaux après compression entre lesdits rouleaux, l'épaisseur du feuillard étant réduite par la force de compression exercée sur lui lorsqu'il passe entre les rouleaux de laminage,
**caractérisé en ce que** la composition lubrifiante comprend au moins un solvant ainsi qu'un additif généralement non volatil, ledit additif étant compatible avec le lithium et comportant au moins une séquence de formule générale L-Y-S dans laquelle :
L désigne un radical alkyle, alkylène, linéaire ou cyclique, ou aryl-alkyle, saturé ou non renfermant plus de 8 atomes de carbone ;
S est choisi dans le groupe constitué par des polyéthers ou des polyamines ayant un poids moléculaire supérieur à 150 et ayant une chaîne à base d'oxyde d'éthylène, d'oxyde de propylène ou de poly(N-méthyl-éthylèneimine), ou une de leurs combinaisons, capables de solvater des sels métalliques et d'assurer une conductivité électrolytique à l'additif ; et
Y est constitué par un groupement ester, éther, amine ou amide, ou un groupement carboxylate provenant d'un ester d'acide gras unissant L et S.

2. Procédé selon la revendication 1, **caractérisé en ce que**, dans l'additif de la composition lubrifiante, le segment oligomère S est relié à un groupement terminal C ayant une faible réactivité vis-à-vis du lithium.

3. Procédé selon la revendication 2, **caractérisé en ce que** le groupement terminal C correspond à la formule Y'-L' dans laquelle Y' et L' répondent aux mêmes définitions que Y et L et sont identiques ou différents de ces derniers.

4. Procédé selon la revendication 1, **caractérisé en ce que**, dans l'additif de la composition lubrifiante, Y représente au moins un groupement chimique divalent.

5. Procédé selon la revendication 1, **caractérisé en ce que**, dans l'additif de la composition lubrifiante, L correspond à la chaîne hydrocarbonée d'un acide gras comportant au moins 14 atomes de carbone.

6. Procédé selon la revendication 1, **caractérisé en ce que** l'additif comporte des motifs oxyéthylène ou oxypropylène.

7. Procédé selon la revendication 2, **caractérisé en ce que** le groupe terminal C représente un groupement ionophore ou un groupement polymérisable.

8. Procédé selon la revendication 1, **caractérisé en ce que** la composition lubrifiante renferme environ 0,01 à 10 % en poids d'additif.

9. Procédé selon l'une des revendications 1 à 8, **caractérisé en ce que** le solvant est choisi parmi les hydrocarbures linéaires saturés ou partiellement insaturés, cycliques ou aromatiques ou non.

10. Procédé selon la revendication 9, **caractérisé en ce que** le solvant est choisi parmi l'heptane, le benzène, le toluène, le cyclohexane ou un mélange de ces derniers.

11. Procédé selon l'une des revendications 1 à 8, **caractérisé en ce que** le solvant est choisi parmi les solvants aprotiques compatibles avec le lithium.

12. Procédé selon la revendication 1, **caractérisé en ce que** la composition lubrifiante contient en outre un sel de lithium.

13. Film mince de lithium ou d'un alliage de lithium recouvert d'une couche d'un additif, destiné à servir d'anode dans un générateur électrochimique, **caractérisé en ce que** l'épaisseur du film est comprise entre 5 et 50 microns, et en ce l'additif généralement non volatil est compatible avec le lithium et comporte au moins une séquence de formule générale L-Y-S dans laquelle :
L désigne un radical alkyle, alkylène, linéaire ou cyclique, ou aryl-alkyle, saturé ou non renfermant plus de 8 atomes de carbone ;
S est choisi dans le groupe constitué par des polyéthers ou des polyamines ayant un poids moléculaire supérieur à 150 et ayant une chaîne à base d'oxyde d'éthylène, d'oxyde de propylène ou de poly(N-méthyl-éthylèneimine), ou une de leurs combinaisons, S étant capable de solvater des sels de lithium et d'assurer une conductivité électrolytique à l'additif ; et
Y est constitué par un groupement ester, éther, amine ou amide, ou un groupement carboxylate provenant d'un ester d'acide gras unissant L et S.

14. Film mince obtenu par un procédé selon l'une des revendications 1 à 7.

15. Anode comprenant un film mince de lithium ou d'un alliage de lithium recouvert d'une couche d'un additif selon l'une des revendications 13 ou 14.

16. Anode selon la revendication 15, dans laquelle le film mince est en contact direct avec un feuillard comportant du carbone ou des métaux susceptibles de former chimiquement un alliage de lithium ou un composé d'intercalation du lithium.

17. Anode selon la revendication 15, **caractérisée en ce que** la couche d'additif contient un sel de lithium.

18. Générateur électrochimique comportant un électrolyte polymère ou un électrolyte liquide placé entre une anode et une cathode, **caractérisé en ce que** l'anode est telle que définie dans l'une des revendication 15 à 17, , et **en ce que** l'électrolyte contient un sel de lithium libre formant par diffusion un complexe conducteur avec la chaîne S de l'additif.

19. Générateur électrochimique selon la revendication 18, **caractérisé en ce que** l'additif est soluble dans l'électrolyte.

20. Composition permettant la mise en forme par laminage d'anodes de lithium ou d'un alliage de lithium, comprenant au moins un solvant ainsi qu'un additif généralement non volatil à titre de lubrifiant de laminage, **caractérisé en ce que** :
- l'additif est compatible avec le lithium et comporte au moins une séquence de formule générale L-Y-S dans laquelle L désigne un radical alkyle, alkylène, linéaire ou cyclique, ou aryl-alkyle, saturé ou non renfermant plus de 8 atomes de carbone, ; S est choisi dans le groupe constitué par des polyéthers ou des polyamines ayant un poids moléculaire supérieur à 150 et ayant une chaîne à base d'oxyde d'éthylène, d'oxyde de propylène ou de poly(N-méthyl-éthylèneimine), ou une de leurs combinaisons, S étant capable de solvater des sels métalliques et d'assurer une conductivité électrolytique à l'additif; et Y est constitué par un groupement ester, éther, amine ou amide, ou un groupement carboxylate provenant d'un ester d'acide gras unissant L et S ; et
- la composition contient en outre un sel de lithium.

## Patentansprüche

1. Verfahren zur Bearbeitung einer dünnen Folie aus Lithium oder einer Lithiumlegierung durch Walzen eines Bandes aus Lithium oder Lithiumlegierung, das als Anode in einem elektrochemischen Generator dienen kann, umfassend einen Schritt, bei dem das Band zwischen zwei miteinander in Kontakt stehenden Walzrollen hindurchgeführt wird, nachdem auf die Oberfläche des Bandes eine Gleitmittelzusammensetzung so aufgetragen wurde, wobei diese Oberfläche beim Pressen des Bandes zwischen den zwei Rollen normalerweise an der Oberfläche einer der beiden Rollen nach dem Pressen zwischen den zwei Rollen anhaftet, wobei die Dicke des Bandes durch die Druckkraft, die während des Hindurchführens zwischen den Walzrollen auf das Band einwirkt, reduziert wird,
**dadurch gekennzeichnet, dass** die Gleitmittelzusammensetzung zumindest ein Lösungsmittel sowie ein im Allgemeinen nichtflüchtiges Additiv umfasst, wobei dieses Additiv mit Lithium verträglich ist und zumindest eine Sequenz der allgemeinen Formel L-Y-S umfasst, worin:
L für einen linearen oder zyklischen Alkyl- oder Alkylenrest oder einen Arylalkylrest steht, der gesättigt oder ungesättigt ist, und mehr als 8 Kohlenstoffatome umfasst;
S aus der aus Polyethern oder Polyaminen mit einem Molekulargewicht über 150 und mit einer Kette auf Basis von Ethylenoxid, Propylenoxid oder Poly(N-methylethylenimin) oder Kombinationen davon bestehenden Gruppe ausgewählt ist, wobei diese Polyether oder Polyamine in der Lage sind, Metallsalze zu solvatisieren und Elektrolyt-Leitfähigkeit des Additivs zu gewährleisten; und
Y aus einer Ester-, Ether-, Amin- oder Amidgruppierung oder einer Carboxylatgruppierung besteht, die von einem Fettsäureester herrührt, der L und S in sich vereint.

2. Verfahren nach Anspruch 1, **dadurch gekennzeichnet, dass** im Additiv der Gleitmittelzusammensetzung das Oligomersegment S an eine C-terminale Gruppierung gebunden ist, die geringes Reaktionsvermögen mit Lithium aufweist.

3. Verfahren nach Anspruch 2, **dadurch gekennzeichnet, dass** für die C-terminale Gruppierung die Formel Y'-L' gilt, worin Y' und L' denselben Definitionen entsprechen wie Y und L und dieselben wie diese oder unterschiedlich sind.

4. Verfahren nach Anspruch 1, **dadurch gekennzeichnet, dass** im Additiv der Gleitmittelzusammensetzung Y zumindest für eine zweiwertige chemische Gruppierung steht.

5. Verfahren nach Anspruch 1, **dadurch gekennzeichnet, dass** im Additiv der Gleitmittelzusammensetzung L der Kohlenwasserstoffkette einer Fettsäure entspricht, die zumindest 14 Kohlenstoffatome umfasst.

6. Verfahren nach Anspruch 1, **dadurch gekennzeichnet, dass** das Additiv Oxyethylen- oder Oxypropylen-Einheiten umfasst.

7. Verfahren nach Anspruch 2, **dadurch gekennzeichnet, dass** die C-terminale Gruppe eine lonophor- oder eine polymerisierbare Gruppe darstellt.

8. Verfahren nach Anspruch 1, **dadurch gekennzeichnet, dass** die Gleitmittelzusammensetzung etwa 0,01 bis 10 Gew.-% an Additiv umfasst.

9. Verfahren nach einem der Ansprüche 1 bis 8, **dadurch gekennzeichnet, dass** das Lösungsmittel aus gesättigten oder teilweise ungesättigten linearen, zyklischen und gegebenenfalls aromatischen Kohlenwasserstoffen besteht.

10. Verfahren nach Anspruch 9, **dadurch gekennzeichnet, dass** das Lösungsmittel aus Heptan, Benzol, Toluol, Cyclohexan oder einem Gemisch daraus ausgewählt ist.

11. Verfahren nach einem der Ansprüche 1 bis 8, **dadurch gekennzeichnet, dass** das Lösungsmittel aus mit Lithium verträglichen aprotischen Lösungsmitteln ausgewählt ist.

12. Verfahren nach Anspruch 1, **dadurch gekennzeichnet, dass** die Gleitmittelzusammensetzung weiters ein Lithiumsalz enthält.

13. Dünne Folie aus Lithium oder einer Lithiumlegierung, die mit einer Schicht aus einem Additiv bedeckt ist und dafür bestimmt ist, als Anode in einer elektrochemischen Generator zu dienen, **dadurch gekennzeichnet, dass** die Dicke der Folie zwischen 5 und 50 µm liegt und dass das im Allgemeinen nichtflüchtige Additiv mit Lithium verträglich ist und zumindest eine Sequenz der allgemeinen Formel L-Y-Sumfasst, worin:
L für einen linearen oder zyklischen Alkyl- oder Alkylenrest oder für einen Arylalkylrest steht, der gesättigt oder ungesättigt ist, und mehr als 8 Kohlenstoffatome umfasst;
S aus der aus Polyethern oder Polyaminen mit einem Molekulargewicht über 150 und mit einer Kette auf Basis von Ethylenoxid, Propylenoxid oder Poly(N-methylethylenimin) oder Kombinationen davon bestehenden Gruppe ausgewählt ist, wobei S in der Lage ist, Metallsalze zu solvatisieren und Elektrolyt-Leitfähigkeit des Additivs zu gewährleisten; und
Y aus einer Ester-, Ether-, Amin- oder Amidgruppierung oder einer Carboxylatgruppierung besteht, die von einem Fettsäureester herrührt, der L und S in sich vereint.

14. Dünne Folie, erhalten durch ein Verfahren nach einem der Ansprüche 1 bis 7.

15. Anode, umfassend eine mit einer Schicht aus einem Additiv bedeckte dünne Folie aus Lithium oder einer Lithiumlegierung nach einem der Ansprüche 13 oder 14.

16. Anode nach Anspruch 15, worin die dünne Folie in direktem Kontakt mit einem Band steht, das Kohlenstoff oder Metalle umfasst, die dazu neigen, durch chemische Reaktion eine Lithiumlegierung oder eine Lithium-Einlagerungsverbindung zu bilden.

17. Anode nach Anspruch 15, **dadurch gekennzeichnet, dass** die Additivschicht ein Lithiumsalz enthält.

18. Elektrochemischer Generator, umfassend einen Polymer-Elektrolyt oder einen flüssigen Elektrolyt, der zwischen einer Anode und einer Katode angeordnet ist, **dadurch gekennzeichnet, dass** die Anode wie in einem der Ansprüche 15 bis 17 definiert ist und dass der Elektrolyt ein freies Lithiumsalz enthält, das durch Diffusion einen leitfähigen Komplex mit der S-Kette des Additivs bildet.

19. Elektrochemischer Generator nach Anspruch 18, **dadurch gekennzeichnet, dass** das Additiv im Elektrolyt löslich ist.

20. Zusammensetzung, die ein Walzformen von Anoden aus Lithium oder einer Lithiumlegierung ermöglicht, umfassend zumindest ein Lösungsmittel sowie ein im Allgemeinen nichtflüchtiges Additiv als Walzgleitmittel, **dadurch gekennzeichnet, dass**:
- das Additiv mit Lithium verträglich ist und zumindest eine Sequenz der allgemeinen Formel L-Y-S umfasst, worin L für einen linearen oder zyklischen Alkyl- oder Alkylenrest oder für einen Arylalkylrest steht, der gesättigt oder ungesättigt ist, und mehr als Kohlenstoffatome umfasst; S aus der aus Polyethern oder Polyaminen mit einem Molekulargewicht über 150 und mit einer Kette auf Basis von Ethylenoxid, Propylenoxid oder Poly(N-methylethylenimin) oder Kombinationen davon bestehenden Gruppe ausgewählt ist, wobei S in der Lage ist, Metallsalze zu solvatisieren und Elektrolyt-Leitfähigkeit des Additivs zu gewährleisten; und Y aus einer Ester-, Ether-, Amin- oder Amidgruppierung oder einer Carboxylatgruppierung besteht, die von einem Fettsäureester herrührt, der L und S in sich vereint; und
- die Zusammensetzung weiters ein Lithiumsalz enthält.

## Claims

1. Process for preparing a thin film of lithium or of an alloy thereof by laminating a sheet of lithium or of an alloy thereof that can be used as anode in an electrochemical cell, comprising a step during which the sheet is passed between two lamination rollers that are in contact with one another, after having deposited on the surface of the sheet a lubricating composition, in such a manner that when compressing the sheet between said rollers, said surface adheres normally to the surface of one of said rollers after compression between said rollers, the thickness of the sheet being reduced as a result of the compression force exerted thereon when it passes between the lamination rollers,
**characterised in that** the lubricating composition comprises at least one solvent as well as one generally non volatile additive, said additive being compatible with lithium and including at least one sequence of general formula L-Y-S in which:
L designates a linear or cyclic, saturated or non saturated alkyl, alkylene, or aryl-alkyl radical, comprising more than 8 carbon atoms;
S is selected from the group consisting of polyethers or polyamines having a molecular weight higher than 150 and having an ethylene oxide, propylene oxide or poly(N-methyl-ethyhleneimine) based chain, or one of their combinations, which are capable of solvating metallic salts and to provide an electrolytic conductivity to the additive; and
Y consists of an ester, ether, amine or amide group, or of a carboxylate group derived from a fatty acid ester connecting L and S.

2. Process according to claim 1, **characterised in that**, in the additive of the lubricating composition, the oligomer segment S is connected to a terminal group C having low reactivity towards lithium.

3. Process according to claim 1, **characterised in that** the terminal group C corresponds to formula Y'-L', in which Y' and L' have the same definitions as Y and L and are identical to or different from the latter.

4. Process according to claim 1, **characterised in that**, in the additive of the lubricating composition, Y represents at least one divalent chemical group.

5. Process according to claim 1, **characterised in that**, in the additive of the lubricating composition, L corresponds to the hydrocarbon chain of a fatty acid containing at least 14 carbon atoms.

6. Process according to claim 1, **characterised in that** the additive contains oxyethylene or oxypropylene units.

7. Process according to claim 2, **characterised in that** the terminal group C represents an ionophoretic group or a polymerizable group.

8. Process according to claim 1, **characterised in that** the lubricating composition contains about 0.01 to 10 weight percent of additive.

9. Process according to one of claims 1 to 8, **characterised in that** the solvent is selected from cyclic, aromatic or non aromatic, saturated or partially unsaturated linear hydrocarbons.

10. Process according to claim 9, **characterised in that** the solvent is selected from heptane, benzene, toluene, cyclohexane or a mixture thereof.

11. Process according to one of claims 1 to 8, **characterised in that** the solvent is selected from aprotic solvents that are compatible with lithium.

12. Process according to claim 1, **characterised in that** the lubricating composition additionally contains a lithium salt.

13. Thin film of lithium or an alloy of lithium that is covered with a layer of an additive, adapted to be used as an anode in an electrochemical cell, **characterised in that** the thickness of the film is between 5 and 50 microns, and **in that** the generally non volatile additive is compatible with lithium and contains at least one sequence of general formula L-Y-S in which:
L designates a linear or cyclic, saturated or non saturated alkyl, alkylene, or aryl-alkyl radical, comprising more than 8 carbon atoms;
S is selected from the group consisting of polyethers or polyamines having a molecular weight higher than 150 and having an ethylene oxide, propylene oxide or poly(N-methyl-ethyleneimine) based chain, or one of their combinations, S being capable of solvating metallic salts and to provide electrolytic conductivity to the additive; and
Y consists of an ester, ether, amine or amide group, or a carboxylate group derived from a fatty acid ester connecting L and S.

14. Thin film obtained by a process according to one of claims 1 to 7.

15. Anode comprising a thin film of lithium or an alloy thereof covered with a layer of an additive according to one of claims 13 or 14.

16. Anode according to claim 15, in which the thin film is in direct contact with a sheet containing carbon or metals capable of chemically forming an alloy of lithium or an intercalation compound of lithium.

17. Anode according to claim 15, **characterised in that** the layer of additive contains a lithium salt.

18. Electrochemical cell containing a polymer electrolyte or a liquid electrolyte disposed between an anode and a cathode, **characterised in that** the anode is such as defined in one of claims 15 to 17, and **in that** the electrolyte contains a free lithium salt that by diffusion provides a complex conductor with the S chain of the additive.

19. Electrochemical cell according to claim 18, **characterised in that** the additive is soluble in the electrolyte.

20. Composition allowing to prepare lithium or lithium alloy anodes by lamination, comprising at least one solvent as well as a generally non volatile additive as a lamination lubricating agent, **characterised in that**;
- the additive is compatible with lithium and includes at least one sequence of general formula L-Y-S in which L designates a linear or cyclic, saturated or non saturated alkyl, alkylene, or aryl-alkyl radical, and comprises more than 8 carbon atoms; S is selected from the group consisting of polyethers or polyamines having a molecular weight higher than 150 and having an ethylene oxide, propylene oxide or poly(N-methyl-ethyleneimine) based chain, or one of their combinations, S being capable of solvating metallic salts and to provide electrolytic conductivity to the additive; and Y consists of an ester, ether, amine or amide group, or a carboxylate group derived from a fatty acid ester connecting L and S; and
- the composition additionally contains a lithium salt.
